# EUROPÄISCHE PATENTSCHRIFT

(11) **EP 3 296 081 B1**
(45) Veröffentlichungstag und Bekanntmachung des Hinweises auf die Patenterteilung: **10.04.2024**
(21) Anmeldenummer: 17191565.5
(22) Anmeldetag: 18.09.2017
(51) Int. Cl.: B29C 65/08, B29C 65/18, B29C 65/74, B29C 65/78, B65B 9/067, B65B 51/22, B65B 51/30, B65B 57/08, B29C 65/00, B65B 51/10

(54) **VERFAHREN UND VORRICHTUNG ZUM HERSTELLEN VON SCHLAUCHBEUTELN**
METHOD AND DEVICE FOR PRODUCING TUBULAR BAGS
PROCÉDÉ ET DISPOSITIF DE FABRICATION DE SACHETS TUBULAIRES

(30) Priorität: 20.09.2016 DE 102016117683
(43) Veröffentlichungstag der Anmeldung: 21.03.2018
(73) Patentinhaber: Gerhard Schubert GmbH, 74564 Crailsheim (DE)
(72) Erfinder: Haaf, Walter, 74564 Crailsheim (DE)
(74) Vertreter: Weickmann & Weickmann PartmbB

(56) Entgegenhaltungen:
- EP-A1- 0 461 689
- WO-A1-2009/023894
- WO-A1-2011/094338
- DE-A1-102013 217 548
- DE-U1-202010 011 706
- JP-A- 2003 237 737
- JP-A- 2006 027 671
- US-A- 4 063 400
- US-A- 5 475 964
- US-A1- 2006 236 659
- US-B1- 6 662 527

## Beschreibung

### I. Anwendungsgebiet

Die Erfindung betrifft ein Verfahren und eine Vorrichtung zum Herstellen von Schlauchbeutel-Verpackungen.

### II. Technischer Hintergrund

Solche Schlauchbeutel werden hergestellt, indem zunächst an einer in Durchlaufrichtung laufenden Folienbahn deren Längs-Ränder gegeneinander gelegt und mittels einer Längs-Siegelnaht die Folienbahn zu einem umfänglich geschlossenen Beutel-Schlauch geschlossen wird.

Der - in der Regel dabei laufende - Beutel-Schlauch wird danach in definierten Längs-Abständen in Querrichtung verschlossen durch Anbringen einer Quer-Siegelnaht, indem die obere Seite gegen die untere Seite des flach gepressten Beutel-Schlauches gesiegelt wird, wobei vor dem Herstellen der nächsten Quer-Siegelnaht in den in Durchlaufrichtung davor, also stromabwärts, liegenden Bereich des Beutel-Schlauches das abzupackende Produkt in den Beutelschlauch eingelegt wird.

Die - in der Regel über ihre gesamte Länge dichten - Siegelnähte werden in aller Regel nicht durch Verklebung hergestellt, da für die Herstellung von Schlauchbeuteln im Durchlaufverfahren ohne Aushärtezeit quasi sofort eine belastungsfähige Siegelnaht benötigt wird, die zum Beispiel bei der LängsSiegelnaht ausreichend belastbar sein muss, um unmittelbar danach diese Siegelnaht verformen zu können, beispielsweise durch das Quer-Siegeln.

Dementsprechend muss das Material des Folienschlauches oder wenigstens seine Außenseite oder Beschichtung im Bereich der jeweiligen Siegelnaht heißsiegelfähig sein, also in der Regel aus einem thermoplastischen Kunststoff bestehen, der durch Wärmezufuhr teigig oder flüssig wird und sich mit einem dagegen gepressten anderen Teil der Siegelfolie nach Entfernen der Wärmequelle durch Erkalten sehr schnell fest verbindet.

Je nach Anwendungsfall muss in der Regel zwischen einer Ultraschall-Siegeleinheit mit Siegelelementen in Form von Amboss und schwingender Sonotrode als erster Alternative und - meist elektrisch - beheizten Heiß-Siegelbacken aus Metall - oder einem anderen gut wärmespeichernden Material - als einfachere und kostengünstigere, jedoch auch schwerer steuerbare Variante einer Siegeleinheit als zweiter Alternative gewählt werden.

Während in der Vergangenheit gerade für das zuverlässige Durchführen des Siegels die Durchlaufgeschwindigkeit des Beutel-Schlauches durch die Maschine möglichst konstant gehalten wurde, werden zur Effizienzsteigerung und Vermeidung von Ausschuss-Beuteln insbesondere beim Anfahren und Herunterfahren der Maschine, aber auch um wechselnde Zufuhr-Mengen an Produkten bewältigen zu können, inzwischen Schlauchbeutel-Maschinen mit variabler Durchlaufgeschwindigkeit betrieben.

Dabei taucht das grundsätzliche Problem auf, dass eine Heiß-Siegelbacke, deren Temperatur sich kurzfristig nicht ändern lässt, für das Herstellen einer korrekten Siegelnaht über eine genau definierte, auf die jeweilige Folie abgestimmte, Siegelzeit und mit einem vorgegebenen Siegeldruck an der Folie anliegen muss. Ist die Siegelzeit zu kurz und/oder der Siegeldruck zu gering, ist die Siegelung nicht zuverlässig belastbar und insbesondere nicht zuverlässig dicht. Ist die Siegelzeit zu lang und/oder der Siegeldruck zu hoch, kann die Folie optisch oder auch mechanisch, insbesondere durch den zu hohen Wärmeeintrag, beschädigt werden.

Bei Schlauchbeutel-Maschinen mit variabler Schlauch-Geschwindigkeit wird deshalb heute häufig die Längs-Siegelnaht mittels Ultraschall-Siegeln hergestellt, weil dabei zum Beispiel bei zurückgehender Durchlaufgeschwindigkeit, also Schlauch-Geschwindigkeit, der Energie-Eintrag über die Sonotrode in die zu siegelnde Folie in Echtzeit daran angepasst werden kann durch Änderung von Ultraschall-Siegel-Parametern wie z.B. den Anpressdruck, also Siegeldruck, Frequenz oder Amplitude der Ultraschallschwingung.

Die Quer-Siegelnähte werden dagegen nach wie vor meist mittels Heiß-Siegelbacken hergestellt. Eine bekannte Bauform der Quer-Siegeleinheit weist um eine Querachse zur Längsrichtung rotierende Quer-Siegelelemente auf beiden Seiten des Folienschlauches auf. Die in ihrem dem Folienschlauch nächstliegenden Drehlagen-Bereich am Folienschlauch anliegen, meist mit einem vorgegebenen Anpress-Druck, und dadurch die Quer-Siegelnaht erzeugt wird.

Auch bei dieser Bauform bereitet jedoch eine Änderung der Schlauchgeschwindigkeit Probleme, da zwar analog zur Schlauchgeschwindigkeit die Umlaufgeschwindigkeit der rotierenden Heiß-Siegelelemente verändert werden kann, so dass deren Kontaktflächen sich synchron mit dem Folienschlauch mitbewegen. Jedoch wird dabei unerwünschter Weise auch die Siegelzeit verändert, indem sie bei abnehmender Schlauch-Geschwindigkeit dadurch ansteigt und somit der Energieeintrag in die Folie unerwünschter Weise erhöht wird, da ja die Heiß-Siegelbacken immer im Wesentlichen die gleiche Temperatur aufweisen.

Die analoge Anwendung des Ultraschall-Siegelns zum Herstellen der Quer-Siegelnaht konnte jedoch bisher nicht zufriedenstellend gelöst werden, da ja die radial abstehende Längs-Siegelnaht des Beutel-Schlauches beim Quersiegeln zur Seite umgelegt wird, und der vom Quer-Siegelwerkzeug zusammengedrückte Querschnitt des Beutel-Schlauches dadurch über seine Quererstreckung teilweise 2-lagig und teilweise 4-lagig ist.

Um auch hier das Ultraschall-Siegeln anwenden zu können, müsste exakt festliegen, in welchen Quer-Bereichen, also Breiten-Bereichen, der Schlauch-Querschnitt 2-lagig und in welchen er 4-lagig ist, und die Oberfläche von Amboss und/oder Sonotrode des Ultraschall-Siegelwerkzeuges hieran angepasst sein.

Die exakte Durchführung des Umlegevorganges der Längs-Siegelnaht und damit exakte Positionierung des 4-lagigen Bereiches innerhalb der Breite des flachgedrückten und ansonsten 2- lagigen Beutelschlauches hat sich jedoch als schwer beherrschbar erwiesen.

In diesem Zusammenhang ist es aus der EP 0461689 A1 bekannt, den Anpressdruck der Quersiegelbacken zu steuern.

Weiterhin ist es aus der DE 102013217548 A1 bekannt, die gesamte Quersiegeleinheit auf in Durchlaufrichtung verlaufenden Schienen gesteuert zu verfahren.

In Durchlaufrichtung verlagerbare Quersiegeleinheiten sind ferner aus der US 2006/0236659 A1, aus der JP 2003-237737, aus der WO 2009/023894A1, aus der JP 2006-27671 sowie aus der US 6662527 B1 bekannt.

Die US 5 475 964 A offenbart ein Verfahren und eine Maschine zur Erzeugung von Schlauchbeuteln.

### III. Darstellung der Erfindung

### a) Technische Aufgabe

Es ist daher die Aufgabe gemäß der Erfindung, ein Verfahren und eine Vorrichtung zum Herstellen der Quer-Siegelnaht zur Verfügung zu stellen, die auch bei sich ändernder Durchlaufgeschwindigkeit zuverlässig eine korrekte Quer-Siegelnaht gewährleistet, insbesondere indem der beim Quer-Siegeln erfolgende Energieeintrag in die Folie unabhängig von der SchlauchGeschwindigkeit beim Quer-Siegeln in einem vorgegebenen Soll-Bereich gehalten werden kann.

### b) Lösung der Aufgabe

Diese Aufgabe wird durch die Merkmale der Ansprüche 1 und 8 gelöst.

Vorteilhafte Ausführungsformen ergeben sich aus den Unteransprüchen.

Vorzugsweise wird zu diesem Zweck die Siegel-Zeit, in der sich die gegeneinander gerichteten Siegelelemente in Kontakt mit dem Folien-Schlauch befinden, entsprechend gesteuert.

Eine andere Möglichkeit besteht darin, zu steuern, über eine wie lange Siegel-Strecke die gegeneinander gerichteten Siegelelemente in Kontakt mit dem Folien-Schlauch bleiben, was meist bei Veränderung mit einer Veränderung der Siegel-Zeit einher geht.

Eine andere aber nicht erfindungsgemäße Möglichkeit besteht darin, den Siegel-Druck zu steuern, mit dem die Siegelelemente am Folien-Schlauch anliegen.

Durch jede dieser zwei erfindungsgemäßen Möglichkeiten wird der Energieeintrag in die Folie des Folienschlauches, konkret in die herzustellende Quer-Siegelnaht, variiert.

Vorzugsweise wird die Quer-Siegelnaht mittels Heiß-Siegelbacken hergestellt. Dies hat den Vorteil, dass die vorgegebene Soll-Temperatur der Kontaktflächen der Heiß-Siegelbacken sehr genau gehalten werden kann aufgrund der hohen Wärme-Kapazität dieser Heiß-Siegelbacken, und dadurch die Quer-Siegelnaht sowohl im zweilagigen als auch im vierlagigen Bereich der umgelegten Längssiegelnaht zuverlässig dicht hergestellt werden kann.

Vorzugsweise bewegen sich die Kontakt-Flächen der Quer-Siegelelemente in einer Schwenkbewegung oder in einer umlaufenden Rotationsbewegung um je eine quer zur Durchlaufrichtung liegende Querachse, von denen sich je eine auf einander gegenüberliegenden Seiten des Folienschlauches befindet.

Für die Steuerung der Umfangsgeschwindigkeit der Kontaktflächen synchron zum Folienschlauch werden die gegeneinander gerichteten Kontaktflächen zunächst einmal entsprechend einer steigenden oder sinkenden Beutelgeschwindigkeit schneller oder langsamer verschwenkt oder gedreht.

Da jedoch auch die Einwirkzeit der Kontaktflächen auf den Folienschlauch, also die Siegelzeit, konstant gehalten werden soll, und dennoch diese Synchronizität aufrechterhalten werden soll, wird die Querachse in Längsrichtung relativ zum Grundgestell der Maschine bewegt. Dadurch wird die vom Aufsetzen der Kontaktfläche auf dem Folienschlauch bis zum Abheben davon dauernde Siegelzeit verringert, wenn sich dabei die Querachse entgegen der Durchlaufrichtung bewegt, und umgekehrt.

Durch Steuerung der Geschwindigkeit dieser Relativbewegung der Querachse kann also die Siegelzeit gesteuert werden und insbesondere bei sich ändernder Schlauchgeschwindigkeit konstant gehalten werden.

Das gleiche gilt analog bei einem nur um die Querachse in Längsrichtung hin und zurück verschwenkbaren Siegelelement.

Während des Quer siebtens, insbesondere auch unter Verwendung des gleichen Werkzeuges, kann im Längsbereich der Quer-Siegelnaht zusätzlich ein Perforieren oder Durchtrennen des Folienschlauches durchgeführt werden. Die so entstehenden getrennten oder leicht zu trennenden Schlauchbeutel werden dann stromabwärts der Perforations- oder Trennstelle einzeln abtransportiert und dabei insbesondere mit einer Abtransport-Geschwindigkeit, die unabhängig sein kann von der Schlauch-Geschwindigkeit, so dass die weitere Verarbeitung der vereinzelten Schlauchbeutel dadurch vereinfacht wird.

Das Quer-Siegeln kann mittels der vorgeschriebenen Bewegungsabläufe auch mittels Ultraschall-Siegeln durchgeführt werden, wovon dann eines der beiden einander gegenüberliegenden Siegelelemente eine mit UltraschallSchwingungen beaufschlagte Sonotrode und das andere Siegelelement der damit zusammenwirkende Amboss ist.

In diesem Fall ist jedoch eine definierte Quer-Position der auf den oberen Außenumfang des flach gedrückten Folien-Schlauches umgelegten LängsSiegelnaht erforderlich, was durch Steuerung der umgelegten Position der Längs-Siegelnaht an oder kurz vor der Quer-Siegelposition erreicht wird.

Erfindungsgemäß bleibt der ist-Energieeintrag im Soll-Bereich und die Quer-Siegelnaht behält eine gleich bleibende Qualität unabhängig von einer sich ändernden Schlauchgeschwindigkeit an der Quer Siegeleinheit.

Vorzugsweise sind die gegeneinander gerichteten Kontakt-Flächen der Quer-Siegelelemente um jeweils eine quer zur Durchlaufrichtung liegende Querachse beweglich angeordnet, wobei die Querachse - vorzugsweise synchron - in und entgegen der Durchlaufrichtung gesteuert beweglich ausgebildet sind.

Die Querachsen sind vorzugsweise - einzeln oder auch gemeinsam in einem oder zwei separaten - in Längsrichtung linear bewegbaren Grundkörper aufgenommen, der in oder entgegen der Längsrichtung gesteuert von der Steuerung verfahrbar ist.

Wenn beide Querachsen im selben Grundkörper gelagert sind, genügt zu dessen Längs-Antrieb ein einziger Motor, wenn der Grundkörper nach Art eines Schlitten entlang von Linear-Führungen linear bewegbar ist, wofür unterschiedliche mechanische Lösungen zur Verfügung stehen, von einem Kurbeltrieb über einen Exzenterantrieb bis zu einer Gewinde-Schnecke, die mit einer in Längsrichtung am Grundkörper angeordneten Verzahnung kämmt.

Eine andere Lösung besteht darin, den Grundkörper mittels Befestigung an einem oder zwei Parallelogrammen linear in und entgegen der Durchlaufrichtung zu führen, wofür keine Linearführungen notwendig sind, sondern die entsprechenden Parallelogramme lediglich entsprechend gesteuert verschwenkt werden müssen, und dadurch ein Höhenversatz des Grundkörpers beim Bewegen in Durchlaufrichtung vermieden bzw. ausgeglichen werden kann.

### c) Ausführungsbeispiele

Ausführungsformen gemäß der Erfindung sind im Folgenden beispielhaft näher beschrieben. Es zeigen:
- Figur 1:: eine Schlauchbeutelmaschine mit einer ersten Bauform der Quer-Siegeleinheit in der Seitenansicht zur Durchlaufrichtung,
- Figur 2:: eine Schlauchbeutelmaschine mit einer zweiten Bauform der Quer-Siegeleinheit in der Seitenansicht zur Durchlaufrichtung
- Figur 3:: eine Schlauchbeutelmaschine mit einer dritten Bauform der Quer-Siegeleinheit in der Seitenansicht zur Durchlaufrichtung,
- Figur 3a, b:: die Quer-Siegeleinheit gemäß Figur 3 vergrößert bei unterschiedlichen Arbeitsstellungen des Grundkörpers.

Die dargestellten Schlauchbeutelmaschinen besitzen eine Durchlaufrichtung 10, in der einerseits die Produkte P herangeführt werden und andererseits die Folienbahn 3 durch die Maschine geführt wird, hier von rechts nach links, und besitzen folgenden, bekannten Grundaufbau:
An einem Grundgestell 1 ist die Transportvorrichtung 2 befestigt, die ein endlos umlaufendes Transportmedium besitzt, welches über ein vorderes und ein hinteres Umlenk-Ritzel 2a, 2b geführt wird und auf dessen etwa horizontalem Obertrum die Produkte P herangeführt werden.

Die Folienbahn 3, aus der die Schlauchbeutel 3" hergestellt werden, wird von einer oberhalb der etwa horizontalen Ebene, auf der die Produkte P herangeführt werden, angeordneten Vorrats-Rolle 21 von oben zugeführt und über die Produkte P gelegt und ihre seitlichen Ränder 3a, b um die auf der Auflagefläche 22 - die ebenfalls vom Grundgestell 1 getragen ist - liegenden Produkte P herum nach unten geführt und gegeneinander gelegt, während des Durchlaufes durch die Schlauchbeutelmaschine.

Dabei werden die gegeneinander gelegten seitlichen Ränder 3a, b mittels der von außen an die Ränder 3a, b angelegten Längssiegel-backen 16a, b einer Längssiegel-Einheit 16 gegeneinander verschweißt, so dass ein umfänglich geschlossener Folienschlauch 3' entsteht mit einer stromabwärts der Längs-Siegeleinheit 16 von diesem schlauchförmigen Querschnitt nach unten in Form einer Finne 9 abstehenden Längs-Siegelnaht 9.

Stromabwärts der Längs-Siegeleinheit 16 wird die Finne 9 mittels einer Umleg-Vorrichtung 20, bestehend aus einem sich in Durchlaufrichtung 10 erstreckenden Leitblech 14, welches an der einen Seite der Finne 9 kontaktierend anliegt, und einem sich ebenfalls in Durchlaufrichtung 10 erstreckenden Schwert 13, welches auf der anderen Seite der Finne 9 kontaktierend anliegt, quer zur Durchlaufrichtung 10 an dem Außenumfang des Folien Schlauches 3' angelegt, wobei sich im Bereich der Umleg-Vorrichtung 20 das Schwert 13 zwischen der umgelegten Finne 9 und dem Außenumfang des FolienSchlauches 3' befindet.

Dieser Folien-Schlauch 3' wird durch die stromabwärts der Längs-Siegeleinheit 16 angeordnete Quer-Siegeleinheit 17 geführt.

Dabei wird in Durchlaufrichtung 10 in vorgegebenen Abständen über die gesamte Quererstreckung des flach gedrückten Folien-Schlauches 3' hinweg eine Quer-Siegelnaht 19 aufgebracht, indem die Oberseite des in einer ersten Querrichtung 11 zur Längsrichtung 10, hier von oben nach unten, flach gedrückten Folien-Schlauches 3' gegen dessen Unterseite verschweißt wird.

Die Abstände und Positionen, an denen die Quer-Siegelnähte 19 angebracht werden, sind so auf die Positionen, in denen sich im Folien-Schlauch 3' die abzupackenden Produkte P befinden, abgestimmt, dass sich in den durch das Quersiegeln erzeugten Schlauchbeuteln 3" jeweils das gewünschte Produkt P oder eine vorgegebene Anzahl davon befindet.

Die einzelnen, gefüllten Schlauchbeutel 3" werden weiter stromabwärts getrennt, indem sie entweder mittels einer nicht dargestellten separaten Einheit innerhalb der - eine begrenzte Erstreckung in Längsrichtung 10 aufweisenden - Quer-Siegelnaht 9 der Folien-Schlauch 3' durchtrennt und dadurch die Schlauchbeutel 3" vereinzelt werden, oder dies wird bereits zusammen mit dem Herstellen der Quer-Siegelnaht 19 durchgeführt oder teilweise mittels Perforieren vorbereitet.

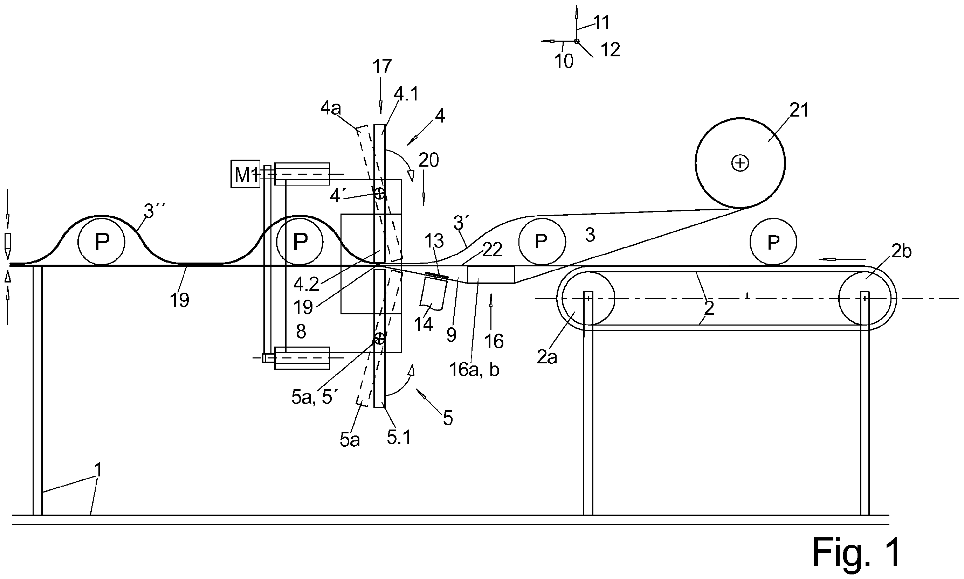

Das Quersiegeln erfolgt bei der 1. Bauform der Quer-Siegeleinheit gemäß Figur 1, indem oberhalb und unterhalb des Folien-Schlauches 3' jeweils eine Siegel-Walze 4, 5 um eine in einer zweiten Querrichtung 12, der Blickrichtung der Figur 1, verlaufende Querachse 4', 5' rotiert.

In Richtung dieser zweiten Querrichtung 12 betrachtet ragen von dieser Querachse 4', 5' - in diesem Fall auf einander gegenüberliegenden Seiten der Querachse zwei - sich ebenfalls in dieser zweiten Querrichtung 12 erstreckende Siegelelemente 4.1, 4.2 bzw. 5.1, 5.2 radial nach außen balkenförmig ab, die in der zweiten Querrichtung 12 eine so große Erstreckung besitzen, dass sie sich über die gesamte Breite des zu siegelnden, flach gedrückten Folien-Schlauches 3' hinweg erstrecken.

Die Querachsen 4', 5' sind dabei so zueinander beanstandet, dass bei gegeneinander gerichteten Siegelelementen 4.2, 5.2 deren gegeneinander weisende Kontaktflächen 4a, 5a einen so geringen Abstand zueinander einnehmen, dass dazwischen gerade noch der flachgedrückte Folienschlauch 3' Platz findet und dennoch die Kontaktflächen 4a, 5a mit einem vorgegebenen Siegel-Druck an dessen Oberseite und Unterseite anliegen.

Die Umfangsgeschwindigkeit der Kontaktflächen 4a, 5a entspricht dabei der Schlauchgeschwindigkeit, mit der der Folien-Schlauch 3' durch die Schlauchbeutel-Maschine bewegt wird, so dass während des Quersiegelns nach Möglichkeit keine Relativbewegung zwischen Folien-Schlauch 3' und den Kontaktflächen 4a, 5a stattfindet, um den Folien-Schlauch 3' und auch die darauf meist bereits aufgebrachte Bedruckung nicht zu beschädigen.

Da dies bei laufendem Folien-Schlauch 3' durchgeführt wird, liegen die gegeneinander gerichteten Kontaktflächen 4a, 5a vom Punkt des ersten Aufsetzens auf dem Folienschlauch 3' mit der Vorderkante der Kontaktfläche 4a, 5a bis zum Abheben von deren Hinterkante von dem Folienschlauch 3' an diesem an, wodurch die Siegel-Strecke 18 definiert wird, die sich in Längsrichtung 10 erstreckt und die aufgrund des dabei laufenden FolienSchlauches 3' länger ist als die Erstreckung der fertiggestellten Quer-Siegelnaht 19 in Längsrichtung 10.

Während bisher die Drehachsen 4', 5' ortsfest im Maschinengestell 1 montiert wurden, und eine Anpassung an eine sich verändernde SchlauchGeschwindigkeit des Folien-Schlauches 3' lediglich dadurch erfolgten konnte, dass die Rotationsgeschwindigkeit der beiden - synchron, aber gegenläufig - rotierenden Siegel-Walzen 4, 5 entsprechend angepasst wurde, können bei der erfindungsgemäßen Quersiegeleinheit 17 diese Querachsen 4', 5' oder Rotationsachse 4', 5' eine begrenzte Strecke in und entgegen der Durchlaufrichtung 10 bewegt werden, auch während des Siegel-Vorganges:
Zu diesem Zweck sind die beiden Querachsen 4', 5' in einem Grundkörper 8 gelagert, der in und entgegen der Durchlaufrichtung 10, gesteuert von einer hierfür vorgesehenen Steuerung 50, verfahrbar ist.

Dies kann mechanisch auf unterschiedliche Art und Weise geschehen:

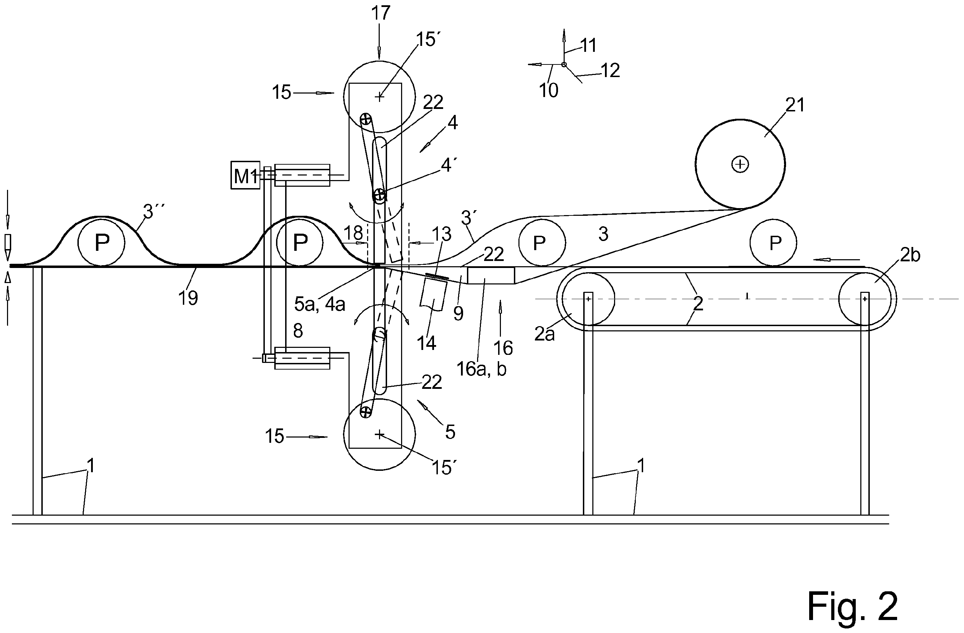

In den Figuren 1 und 2 ist in Durchlaufrichtung 10 eine Verzahnung an mindestens einer, hier zwei bezüglich der Auflagefläche 22 einander gegenüber liegenden Seiten des Grundkörpers 8 aufgebracht, welche mit jeweils einem damit kämmenden Zahnrad, hier einer Gewindespindel, die sich ebenfalls in Durchlaufrichtung 10 erstreckt, kämmt. Beide Gewindespindeln sind über beispielsweise einen Zahnriemen, insbesondere synchron, drehfest miteinander verbunden und werden gemeinsam von einem von der Steuerung 50 angesteuerten Motor M1 in Drehung versetzt.

Indem die Schwenkachsen 4', 5' , insbesondere synchron, entgegen der Durchlaufrichtung 10 bewegt werden, während sich die beiden gegeneinander gerichteten Kontaktflächen 5a in Kontakt mit dem Folien-Schlauch 3' befinden, kann die oben definierte Siegelstrecke 18 verringert und dadurch die Siegel-Zeit, in der diese Kontaktflächen 4a, 5a der Siegelelemente 4.1, 4.2 bzw. 5.1, 5.2 in Kontakt mit dem Folien-Schlauch 3' sind, verringert werden. Dies ist notwendig, wenn die Schlauch-Geschwindigkeit abnimmt.

Die umgekehrte, insbesondere synchrone, Bewegung der Querachsen 4', 5' in Durchlaufrichtung 10 ist folglich notwendig, wenn die SchlauchGeschwindigkeit ansteigt.

Läuft der Folien-Schlauch 3' dagegen mit der vorgegebenen Soll-Schlauchgeschwindigkeit, für den die Dimensionierung der Siegel-Walzen 4, 5 ausgelegt sind, ist während des Siegels keine Längsbewegung der Querachsen 4', 5' in Längsrichtung 10 notwendig.

Bei der 2. Bauform der Quer-Siegeleinheit gemäß Figur 2 umfasst die QuerSiegeleinheit 17 keine Siegel-Walzen, sondern lediglich oberhalb und unterhalb der Auflagefläche 22 jeweils einen von der Querachse 4', 5' radial abstrebenden Siegelstempel 4, 5 als Siegelement, der jedoch durch hin und her Schwenken um die jeweilige Querachse 4', 5' mit seiner am vorderen radialen Ende ausgebildeten Kontaktfläche 4a, 5a lediglich um einen begrenzten Schwenkwinkel in Durchlaufrichtung 10 vor und zurück bewegt werden kann.

Die Vorwärtsbewegung ist dabei so gesteuert, dass sich dabei die Kontaktflächen 4a, 5a synchron mit dem Folien-Schlauch 3' mit bewegen, mit dem sie zum Herstellen der Quer-Siegelnaht 19 in Kontakt stehen.

Da für das Zurückbewegen der Kontaktfläche 4a, 5a entgegen der Durchlaufrichtung 10 kein Kontakt mit dem Folienschlauch 3' erwünscht ist, muss zwischen Vorwärtsbewegung und Rückwärtsbewegung des schwenkbaren Siegelstempels 4, 5 eine Abhebe-Bewegung in der zweiten Querrichtung 12 stattfinden, die durch einen Kurbeltrieb 15 realisiert ist:
Zu diesem Zweck ist der Siegelstempel 4, 5 - in Richtung der Schwenkachse 4' bzw. 5' betrachtet - als zweiarmiger, beidseits von der Schwenkachse 4' bzw. 5' abragender, Hebel ausgebildet und die Querachse 4', 5', also die Schwenkachse 4', 5', ist jeweils in einer sich in der ersten Querrichtung 11 erstreckenden Achs-Führung 23 geführt.

Das hintere, von der jeweiligen Kontaktfläche 4a, 5a abgewandte, Ende des Siegelstempels 4, 5 ist exzentrisch an einer Kurbel 15 befestigt, deren Kurbelachse 15' in der zweiten Querrichtung 12 verläuft und die von der Steuerung 50 gesteuert rotiert. Dadurch vollziehen die Kontaktfläche 4a5a in der Seitenansicht betrachtet eine Kreisbewegung.

Sowohl der Kurbeltrieb 15 als auch die Achs-Führung 23 sind am Grundkörper 8 angeordnet, der wie anhand von Figur 1 beschrieben gesteuert in und entgegen der Durchlaufrichtung 10 linear verfahrbar ist.

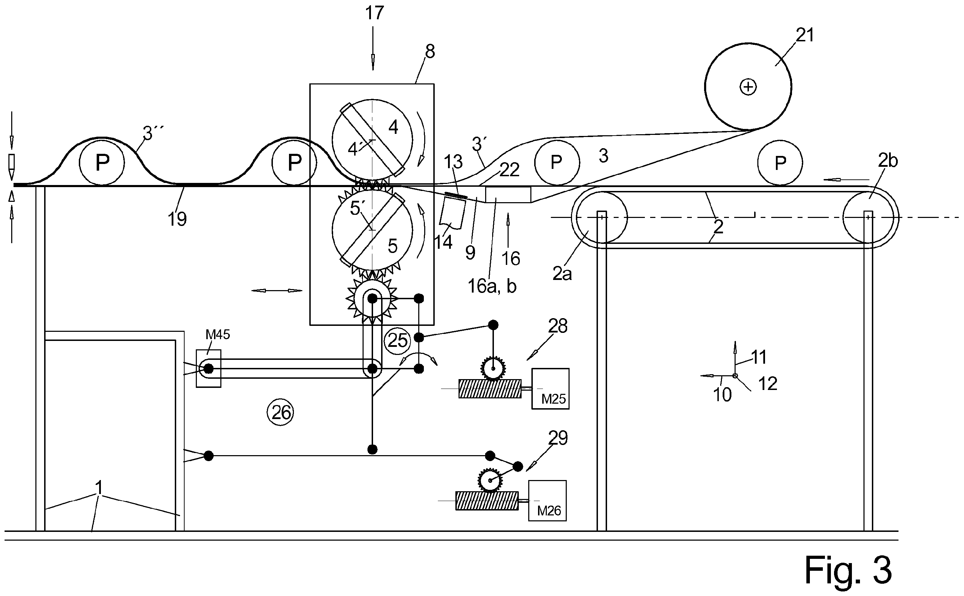

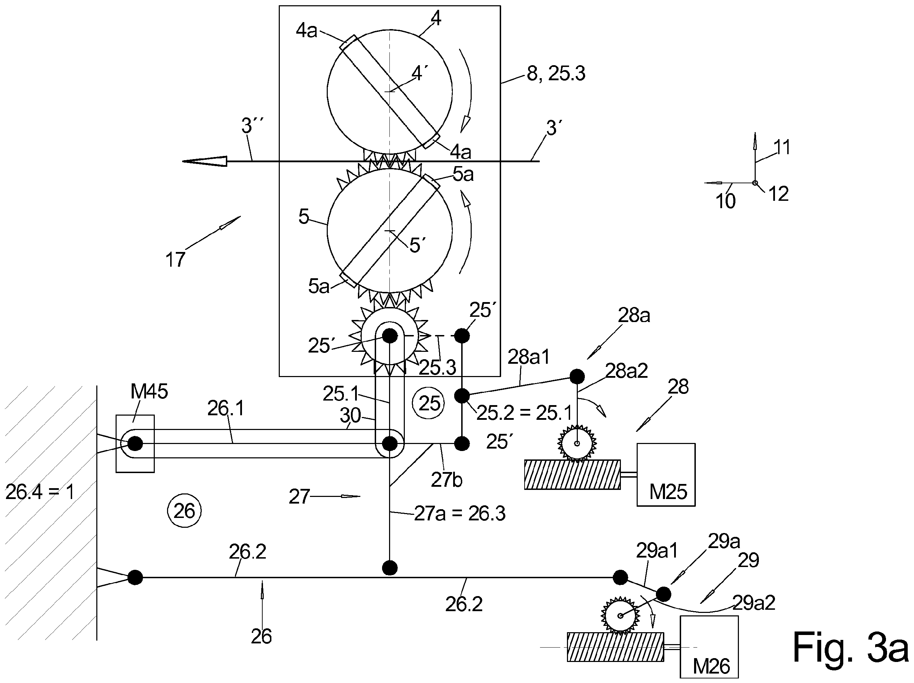

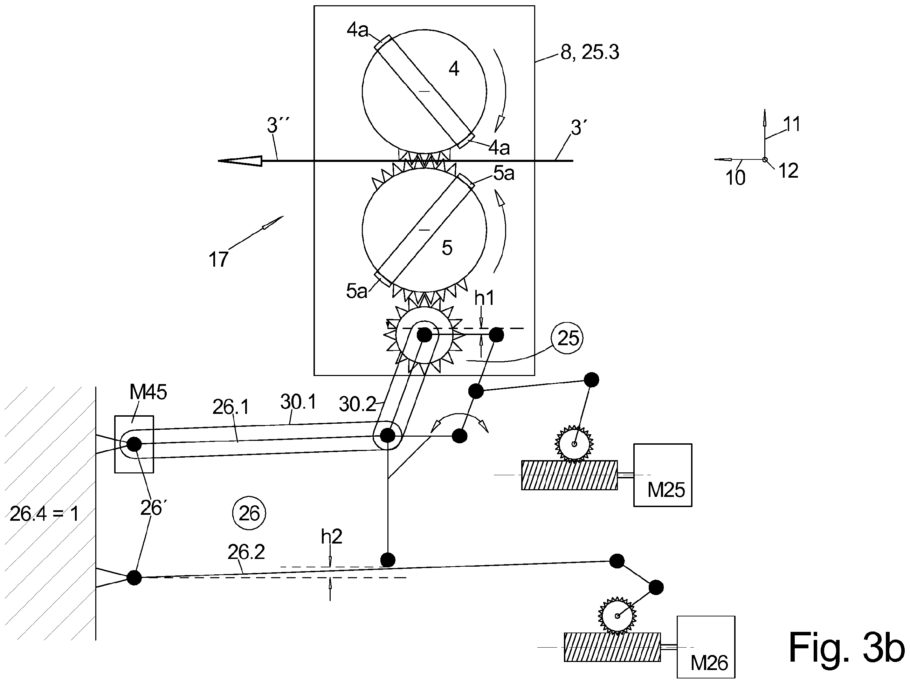

Bei der 3. Bauform der Quer-Siegeleinheit gemäß Figur 3 wird die gewünschte synchrone Bewegung in und entgegen der Durchlaufrichtung 10 der beiden Rotationsachse 4', 5' der Siegelwalzen 4,5 dadurch erreicht, dass der Grundkörper 8 der Quersiegel-Einheit 17 Parallelogramm-geführt ist:
Vorauszuschicken ist, dass die in den Figuren 3, 3a und 3b sichtbare und nachfolgend beschriebene Parallelogramm-Anordnung bestehend aus den Schwenkhebel-Parallelogrammen 25, 26 in Blickrichtung dieser Figuren in aller Regel zweifach hintereinander vorhanden ist, und sich der Grundkörper 8 mit den darin gelagerten Siegelwalzen 4, 5 in der Aufsicht von oben betrachtet zwischen diesen beiden Parallelogramm-Anordnungen befindet, von denen nachfolgend nur jeweils die eine beschrieben ist, da die Blickrichtung dahinterliegende 2. Parallelogramm-Anordnung identisch ausgebildet ist und synchron mit der beschriebenen sichtbaren Parallelogramm-Anordnung bewegt wird.

Die Quersiegel-Einheit 17 , die zwei rotierende Siegelwalzen 4,5 umfasst, ist samt Parallelogrammführung ihres Grundkörpers 8 in Figur 3 in der ansonsten gleich ausgebildeten Schlauchbeutel-Maschine wie diejenigen der Figuren 1 und 2 eingebaut dargestellt.

Die Parallelogrammführung lässt sich jedoch besser in der vergrößerten Einzeldarstellung der Figuren 3a, 3b erkennen, wovon die Stellung der Parallelogrammanordnung gemäß Figur 3a auch als Ausgangs-Stellung aufgefasst werden könnte.

Ziel ist es, den Grundkörper 8 mit den darin gelagerten Siegelwalzen 4 ,5 während des Siegelvorganges, also wenn Kontaktflächen 4a, 5a der Siegelwalzen 4, 5 an dem durchlaufenden Folienschlauch 3' anliegen, deren Rotationsachsen 4', 5' gesteuert in oder entgegen der Durchlaufrichtung 10 zu verlagern, um dadurch die Siegelzeit zu verändern.

Bei der Parallelogrammführung gemäß der Figuren 3 ist diese Verlagerung in Längsrichtung 10 möglich, indem am Grundkörper 8 zwei Parallelogrammachsen 25' eines ersten Schwenkhebel-Parallelogramms 25 angeordnet sind, in denen zwei parallel zueinander liegende Schwenkhebel 25.1, 25.2 des Parallelogramm 25 mit einen Ende, hier dem oberen Ende, enden. Der Grundkörper 8 stellt somit das verbindende Joch in Form des dritten Schwenkhebels 25.3 dieses ersten Parallelogramms 25 dar.

Durch Verschwenken dieser beiden zueinander parallelen Schwenkhebel 25.1, 25.2 um ihre unteren, vom Grundkörper 8 abgewandten, Parallelogrammachsen 25' mittels eines ersten Parallelogramm-Antriebes 28 wird der Grundkörper 8 von der in Figur 3a dargestellten Stellung beispielsweise nach rechts geschwenkt.

Dadurch verlagern sich jedoch die beiden im Grundkörper 8 liegenden Parallelogramm-Achsen 25' auch etwas nach unten, wie in Figur 3b zu erkennen, nämlich um den Höhenversatz h1.

Da dies in aller Regel jedoch nicht erwünscht ist, denn der Folienschlauch 3' wird ja permanent auf der gleichen Höhe zugeführt, ist dieses erste Schwenkhebel-Parallelogramm 25 auf der vom Grundkörper 8 abgewandten Seite nicht ortsfest fixiert, sondern an einem zweiten Schwenkhebel-Parallelogramm 26 welches seinerseits erst mit dem vom ersten Schwenkhebel-Parallelogramm 25 abgewandten Ende ortsfest, vorzugsweise am Gestell 1 der Maschinengestell, angeordnet ist.

Das Maschinengestell 1, an dem sich zwei der vier Schwenkachsen 26.1 des zweiten Schwenkhebel-Parallelogramm 26 befinden, dient also als Joch und viertem Schwenkhebel 26.4, welcher die beiden vom ersten Parallelogramm 25 abgewandten Enden der beiden parallelen Schwenkhebel 26.1, 26.2 des zweiten Parallelogramm 26 verbindet.

Das andere Ende dieser beiden Schwenkhebel 26.1, 26.2 wird durch einen Schenkel 27a eines Dreiecks-Lenkers 27, also eines dreieckigen Schwenkhebels, als dritten Schwenkhebel 26.3 gebildet, dessen anderer Schenkel 27b die beiden von dem Grundkörper 8 abgewandten Schwenkachsen 25' des ersten Parallelogramms 25 trägt.

Da die beiden parallelen Schwenkhebel 26.1, 26.2 des 2. Parallelogramm 26 primär in Längsrichtung 10 verlaufen, kann durch Verschwenken eines dieser beiden Schwenkhebel, in diesem Fall wie angegeben nach oben - der Dreieckslenker 27 um eine gewünschte Höhenversatz h2 nach oben verlagert werden. Dadurch bleibt der zuvor horizontale obere Schenkel 27b dabei horizontal, so dass auch das darauf aufsitzende erste Parallelogramm 25 und damit der damit verbundene Grundkörper 8 in einer horizontalen Lage verbleibt.

Da man in der Regel möchte, dass die horizontale Mittelebene zwischen den beiden Rotationsachse 4', 5' in unveränderter Höhenlage verbleibt trotz hin und her bewegen des Grundkörpers in Längsrichtung 10, erfolgt die Steuerung dieses zweiten Parallelogramm-Antriebes 29, der das zweite Schwenkhebel-Parallelogramm 26 verschwenkt, in aller Regel so, dass deren durch das Verschwenken des ersten Parallelogramms 25 bewirkte Höhenversatz h1 gerade ausgeglichen wird.

Jedoch ist auch eine anderer, frei wählbarer, Höhenversatz des Grundkörpers 8 erzielbar.

Auf diese Art und Weise bewegt kann sich der Grundkörper 8 in und entgegen der Durchlaufrichtung 10 bei jedem Siegelvorgang hin und her auf der gleichen Höhenlage gegenüber dem Grundgestell 1.

Da die Schwenkbewegungen der Parallelogramme 25, 26 relativ gering sind, und dennoch der Antrieb des jeweiligen Parallelogramms 25, 26 mittels eines Schwenkhebels als Antriebshebel 28a, 29a erfolgen soll, ist der jeweilige Schwenkhebel 28a bzw. 29a drehfest an einem Ritzel befestigt, welches mit einer Gewinde-Schnecke kämmt, die von einem Motor M25 bzw. M26 angetrieben wird.

Dadurch kann der jeweilige Motor M25, M26 eine Reihe von Umdrehungen vollziehen, um den Grundkörper 8 von der linken zur rechten Endlage zu bewegen, so dass die Lager im Motor nicht nur in einem geringen Winkelumfang hin und her bewegt werden.

Die Schwenkhebel 28a bzw. 29a sind in diesem Fall als zwei aneinander anschließende, gelenkig miteinander verbundenen Einzel-Hebeln 28a1, 28a2 bzw. 29a1, 29a2 ausgebildet, da durch Variation von deren Längen zueinander unterschiedliche Übersetzungen zwischen dem Schwenkwinkel des Antriebshebels 28a, 29a und dem Schwenkwinkel des jeweils davon angetriebenen Parallelogramm 25, 26 eingestellt werden kann.

Um das Gewicht des die Siegelwalzen 4, 5 antreibenden Motors 45 nicht mitbewegen zu müssen, ist dieser nicht am Grundkörper 8 befestigt, sondern außerhalb und treibt in diesem Fall über entsprechende Riemen 30.1, 30.2 eines Riementriebes 30 sowie miteinander kämmende Zahnräder die beiden Siegelwalzen 4, 5 gegenläufig und mit gleicher Drehzahl an:
Zu diesem Zweck ist der Motor M45 mit einer Riemenscheibe drehfest verbunden, die konzentrisch zu einer der gestellseitigen Parallelogramm-Achsen 26' des zweiten Schwenkhebel-Parallelogramms 26 angeordnet ist, welches über einen ersten umlaufenden Riemen 30.1 eine zweite Riemenscheibe in Drehung versetzt, die konzentrisch zu der anderen Gelenkachse 26' dieses Schwenkhebels 26.1 angeordnet ist.

In gleicher Weise ist damit ein zweiter umlaufender Riemen 30.2 verbunden, der über jeweils eine Riemenscheibe läuft, die jeweils konzentrisch zu den Parallelogrammachsen 25' eines Schwenkhebels 25.1 des ersten Parallelogramms 25 verläuft und an dem grundkörperseitigen Ende mit einem Ritzel wirkverbunden ist, insbesondere drehfest verbunden ist, welches mit einer vorzugsweise stirnseitig auf einer der Siegelwalzen 5 angeordneten Verzahnung kämmt, die wiederum direkt mit einer auf dem anderen Siegelwalze 4 aufgebrachten Verzahnung kämmt.

Auf diese Art und Weise bleibt das Gewicht des Grundkörpers 8 mit den Siegelwalzen 4, 5 relativ gering und kann mit geringem Energieaufwand hin und her bewegt werden.

### BEZUGSZEICHENLISTE

- 1: Grundgestell
- 2: Transportvorrichtung
- 2a, b: Umlenk-Ritzel
- 3: Folienbahn
- 3a, b: Rand
- 3': Folienschlauch
- 3": Schlauchbeutel
- 4: Siegelwalze, Siegelstempel, Siegelelement
- 4': Querachse, Rotationsachse, Schwenkachse
- 4a: Kontaktfläche
- 5: Siegelwalze, Siegelstempel, Siegelelement
- 5': Querachse, Rotationsachse, Schwenkachse
- 5a: Kontaktfläche
- 6: Sonotrode
- 7: Amboss
- 8: Grundkörper
- 9: Längs-Siegelnaht
- 10: Durchlaufrichtung, Längsrichtung
- 11: erste Querrichtung, Quersiegel-Richtung
- 12: zweite Querrichtung
- 13: Schwert
- 14: Leitblech
- 15: Kurbel, Kurbeltrieb
- 15': Kurbelachse
- 16: Längssiegel-Einheit
- 16 a: Längssiegel-Backe
- 17: Quersiegel-Einheit
- 18: Siegelstrecke
- 19: Quer-Siegelnaht
- 20: Umleg-Vorrichtung
- 21: Vorrats-Rolle
- 22: Auflagefläche
- 23: Achsführung
- 25: erstes Schwenkhebel-Parallelogramm
- 25': Parallelogramm-Achse
- 25.1- 4: Schwenkhebel
- 26: zweites Schwenkhebel-Parallelogramm
- 26': Parallelogramm-Achse
- 26.1- 4: Schwenkhebel
- 27: Dreieck-Lenker
- 27 a, b: Schenkel
- 28: Parallelogramm-Antrieb
- 29: Parallelogramm-Antrieb
- 30: Riementrieb
- 30.1,30.2: Riemen

- H1, H2: Höhenversatz
- M1: Motor
- M25: Motor
- M26: Motor
- M45: Motor

## Patentansprüche

1. **Verfahren** zum Herstellen der Längs-Siegelnaht (9) und der Quer-Siegelnaht (19) bei der Erzeugung von Schlauchbeuteln (3") am in Durchlaufrichtung (10) mit einer variablen Schlauch-Geschwindigkeit laufenden FolienSchlauch (3')
wobei die Längs-Siegelnaht (9) hergestellt wird durch Ultraschall-Siegeln und
- dabei der Energie-Eintrag über die Sonotrode in die zu siegelnde Folie (3) in Echtzeit angepasst wird durch Änderung von Ultraschall-Siegel-Parametern,
wobei die Quer-Siegelnaht (19) hergestellt wird durch
- Gegeneinanderpressen von bezüglich des Folien-Schlauches (3') einander gegenüberliegenden zwei Quer-Siegelelementen (4, 5) in einer ersten Querrichtung (11)zur Durchlaufrichtung (10) über eine Siegel-Zeit mit einem Siegel-Druck und Erwärmen und Quer-Siegeln des dazwischen befindlichen Folien-Schlauches (3'),
- wobei die gegeneinander gerichteten Kontakt-Flächen (4a, 5a) der beiden Quer-Siegelelemente (4, 5) im Wesentlichen synchron über eine begrenzte Siegel-Strecke (18) mit dem daran anliegenden Folien-Schlauch (3') mit bewegt werden,
wobei
in Abhängigkeit von der sich ändernden Schlauch-Geschwindigkeit die Betriebsparameter der Quer-Siegel-Elemente (4, 5), nämlich
- die Siegel-Zeit
oder
- die Länge der Siegel-Strecke (18)
automatisch so gesteuert werden, dass der beim Quersiegeln in die konkret herzustellende, Quer-Siegelnaht der Folie (3) hinein bewirkte Energie-Eintrag innerhalb eines vorgegebenen Soll-Bereiches gehalten wird.

2. Verfahren nach Anspruch 1,
**dadurch gekennzeichnet, dass**
- die Siegelelemente (4, 5) die Heiß-Siegelelemente (4, 5) einer Heiz-Siegeleinheit sind und
- die Temperatur der Kontaktflächen (4a, 5a) der Heiß-Siegelelemente (4, 5) in Abhängigkeit von der Durchschnitts-Schlauchgeschwindigkeit gesteuert wird.

3. Verfahren nach Anspruch 1 oder 2,
**dadurch gekennzeichnet, dass**
- die gegeneinander gerichteten Kontakt-Flächen (4a, 5a) der Quer-Siegelelemente (4, 5) um jeweils eine quer zur Durchlaufrichtung (10) und quer zur ersten Querrichtung (11) in einer zweiten Querrichtung (12) liegende Querachse (4', 5') bewegt werden und
- die Querachsen (4', 5') der Quer-Siegelelemente (4, 5) wenigstens während des Gegeneinanderpressens relativ zum Folien-Schlauche (3') in Längsrichtung (10) verlagert werden in Abhängigkeit von der SchlauchGeschwindigkeit.

4. Verfahren nach Anspruch 3,
**dadurch gekennzeichnet, dass**
die Querachsen Rotationsachsen (4', 5') sind, um die das jeweilige Quer-Siegelelement (4, 5) welches mit wenigstens einer radial nach außen weisenden Kontaktfläche (4a, 5a) ausgestattet ist, dreht.

5. Verfahren nach Anspruch 3,
**dadurch gekennzeichnet, dass**
die Querachsen Schwenkachsen (4', 5') sind, um die die jeweiligen Quer-Siegelelemente (4, 5) hin und her geschwenkt werden und deren radial von den Querachsen (4', 5') nach außen weisende Kontaktflächen (4a, 5a) dadurch in Durchlaufrichtung (10) vor und zurück bewegt werden und insbesondere die Schwenkachsen (4', 5') zusätzlich oszillierend in der ersten Querrichtung (11) so bewegt werden, dass die beiden Kontaktflächen (4a, 5a) den FolienSchlauch (3') abwechselnd gleichzeitig kontaktieren und gleichzeitig wieder von ihm abheben.

6. Verfahren nach einem der Ansprüche 1 oder 3 - 5,
**dadurch gekennzeichnet, dass**
- als Siegelelemente (4, 5) die Sonotrode und der Amboss einer Ultraschall-Siegeleinheit verwendet werden und
- eine am Folien-Schlauch (3') vorhandene Längs-Siegelnaht (9) in definierter Ablageposition auf der Oberseite des Folien-Schlauches (3') vor dem Quer-Siegeln abgelegt wird,
- insbesondere dann auch die Frequenz und/oder Amplitude und/oder Schwingungsrichtung der Sonotrode automatisch in Abhängigkeit der sich ändernden Schlauchgeschwindigkeit gesteuert werden.

7. Verfahren nach einem der vorhergehenden Ansprüche
**dadurch gekennzeichnet, dass**
- während des Quer-Siegelns, insbesondere unter Verwendung des gleichen Werkzeuges, im Längsbereich der Quer-Siegelnaht (19) ein Perforieren oder Durchtrennen des Folien-Schlauches (3') in der zweiten Querrichtung (12) erfolgt, und
- stromabwärts des Durchtrennens die erzeugten einzelnen SchlauchBeutel (3") abtransportiert werden, insbesondere mit einer Abtransport-Geschwindigkeit, die unabhängig ist von der Schlauch-Geschwindigkeit des Folien-Schlauches (3') beim Durchtrennen.

8. Schlauchbeutel-**Maschine** mit
- einem Grundgestell (1),
- einer Ultraschall-Längs-Siegeleinheit (16) zum Gegeneinander-Siegeln der seitlichen Ränder (3a, b) der Folienbahn (3) mittels einer in Durchlaufrichtung (10) der Folienbahn (3) verlaufenden Längs-Siegelnaht (9) zu einem Folienschlauch (3'),
- einer Quer-Siegeleinheit (17) mit in sowohl einer ersten Querrichtung (11) zur Durchlaufrichtung (10) als auch in und entgegen der Durchlaufrichtung (10) des Folien-Schlauches (3') beweglichen Kontakt-Flächen (4a, 5a) von Siegelelementen (4, 5) zum Herstellen einer sich insbesondere primär, in einer zweiten Querrichtung (12) erstreckenden Quer-Siegelnaht (19),
- einer Steuerung (50) zum Steuern der gesamten Schlauchbeutel-Maschine,
wobei
die Ultraschall-Längs-Siegeleinheit (16) und die Steuerung (50) so ausgebildet sind, dass der Energie-Eintrag über die Sonotrode in die zu siegelnde Folie (3) in Echtzeit an die sich ändernde Schlauchgeschwindigkeit angepasst werden kann durch Änderung von Ultraschall-Siegel-Parametern,
die Quer-Siegeleinheit (17) und die Steuerung (50) so ausgebildet sind, dass deren Betriebsparameter, nämlich
- die Siegel-Zeit,
oder
- die Länge der Siegel-Strecke (18)
in Abhängigkeit von der sich ändernden Schlauch-Geschwindigkeit automatisch von der Steuerung so gesteuert werden können, dass der beim Quersiegeln in die konkret herzustellende, Quer-Siegelnaht der Folie (3) hinein bewirkte Energie-Eintrag innerhalb eines vorgegebenen Soll-Bereiches gehalten werden kann.

9. Schlauchbeutel-Maschine nach Anspruch 8,
**dadurch gekennzeichnet, dass**
- die gegeneinander gerichteten Kontakt-Flächen (4a, 5a) der Quer-Siegelelemente (4, 5) um jeweils eine quer zur Durchlaufrichtung (10) und quer zur ersten Querrichtung (11) in einer zweiten Querrichtung (12) liegende Querachse (4', 5') beweglich angeordnet sind und
- die Querachsen (4', 5') der Quer-Siegelelemente (4, 5) wenigstens während des Gegeneinanderpressens relativ zum Folien-Schlauche (3') in Längsrichtung (10) verlagert werden in Abhängigkeit von der SchlauchGeschwindigkeit.

10. Schlauchbeutel-Maschine nach Anspruch 9,
**dadurch gekennzeichnet, dass**
- die Querachsen (4', 5') Schwenkachsen (4', 5') sind, um die die jeweiligen Siegelelemente (4, 5) hin und her schwenken und deren insbesondere radial von den Querachsen (4', 5') nach außen weisende Kontaktflächen (4a, 5a) sich dadurch in Durchlaufrichtung (10) vor und zurück bewegen und
- insbesondere die Schwenkachsen (4', 5') sich zusätzlich oszillierend in der ersten Querrichtung (11) so bewegen, dass die beiden Kontaktflächen (4a, 5a) den Folien-Schlauch (3') abwechselnd gleichzeitig kontaktieren und gleichzeitig wieder von ihm abheben, insbesondere
- die um die Schwenkachsen (4', 5') hin und her schwenkenden Siegelelemente (4, 5), insbesondere jeweils, mit einer Kurbel (15), die um zweite Querrichtung (12) rotiert, wirkverbunden sind.

11. Schlauchbeutel-Maschine nach Anspruch 9 oder 10,
**dadurch gekennzeichnet, dass**
- die Querachsen (4', 5') Rotationsachsen (4', 5') sind, um die das jeweilige Siegelelement (4, 5), insbesondere die Siegelwalze (4, 5), welche mit wenigstens einer radial nach außen weisenden Kontaktfläche (4a, 5a) ausgestattet ist, drehbar ist,
- insbesondere die Siegelelemente (4, 5), insbesondere gemeinsam, in einem in und entgegen der Durchlaufrichtung (10), insbesondere linear, bewegbaren Grundkörper (8) angeordnet sind.

12. Schlauchbeutel-Maschine nach Anspruch 11,
**dadurch gekennzeichnet, dass**
der Grundkörper (8) in und entgegen der Durchlaufrichtung (10) bewegbar ist, indem er entlang von in Durchlaufrichtung (10) verlaufenden Führungen als Schlitten verschiebbar ist.

13. Schlauchbeutel-Maschine nach Anspruch 11 oder 12,
**dadurch gekennzeichnet, dass**
- an dem Grundkörper (8) zwei der vier in der zweiten Querrichtung (12) verlaufenden Parallelogramm-Achsen (25') eines ersten Gelenk-Vierecks in Form eines ersten Schwenkhebel-Parallelogramms (25) , insbesondere direkt, angeordnet sind,
- wobei der Grundkörper (8) die beiden analogen Enden der beiden Schwenkhebel (25.1, 25.2) des ersten Schwenkhebel-Parallelogramms (25) als Joch (25.4) verbindet.

14. Schlauchbeutel-Maschine nach Anspruch 13,
**dadurch gekennzeichnet, dass**
- die von dem Grundkörper (8) oder Joch (8) abgewandten Enden der beiden Schwenkhebel (25.1, 25.2) des ersten Schwenkhebel-Parallelogramms (25) an einem zweiten Schwenkhebel-Parallelogramms (26) schwenkbar befestigt sind,
- wobei die Schwenkhebel (26.1, 26.2) des zweiten Schwenkhebel-Parallelogramms (26) ebenfalls um in der zweiten Querrichtung (12) verlaufende Parallelogramm-Achsen (26') schwenkbar sind und
- die von dem ersten Schwenkhebel-Parallelogramm (25) abgewandten Enden der beiden Schwenkhebel (26.1, 26.2) des zweiten Schwenkhebel-Parallelogramms (25) am Grundgestell (1) der Maschine schwenkbar, insbesondere direkt, befestigt sind.

15. Schlauchbeutel-Maschine nach Anspruch 13 oder 14,
**dadurch gekennzeichnet, dass**
das die beiden Schwenkhebel (26.1, 26.2) des zweiten Schwenkhebel-Parallelogramms (26) auf der vom Grundgestell (1) abgewandten Ende verbindende Joch (26.4) ein Schenkel (27a) eines Dreiecks-Lenkers (27) ist, an dessen anderem Schenkel (27b) die beiden Schwenkhebel (25.1, 25.2) des ersten Schwenkhebel-Parallelogramms (25) angeordnet sind.

16. Schlauchbeutel-Maschine nach einem der Ansprüche 13 - 15,
**dadurch gekennzeichnet, dass**
- die Schwenkhebel (25.1,25.2 oder 26.1, 26.2) des einen Schwenkhebel-Parallelogramms (25 oder 26) primär in der ersten Querrichtung (11) verlaufen und der Verlagerung des Grundkörpers (8) primär in Längsrichtung (10) dienen
und/oder
- die Schwenkhebel (26.1, 26.2 oder 25.1, 25.2) des anderen Schwenkhebel-Parallelogramms (26 oder 25) primär in der Längsrichtung (10) verlaufen und der Verlagerung des Grundkörpers (8) primär in der ersten Querrichtung (11) dienen.

17. Schlauchbeutel-Maschine nach einem der Ansprüche 13 - 16,
**dadurch gekennzeichnet, dass**
- an jedem Schwenkhebel-Parallelogramm (25, 26) ein Parallelogramm-Antrieb (28,29) angreift, der - insbesondere über einen schwenkbaren Antriebshebel (28a, 29a) - mittels eines Schnecken/Ritzel-Triebes von einem eigenen Motor (M25, M26) gesteuert antreibbar ist,
- wobei die Steuerung in der Lage ist, die beiden Parallelogramm-Antriebe so zu steuern, dass trotz der Bewegung des Grundkörper (8) in Längsrichtung (10) der Grundkörper (8) in der gleichen oder einer wahlfreien Höhenlage gegenüber dem Grundgestell verbleibt und/oder in der gleichen Winkellage zur Horizontalen.

18. Schlauchbeutel-Maschine nach einem der Ansprüche 13 bis 17,
**dadurch gekennzeichnet, dass**
der wenigstens eine Motor (M45) zum Antreiben der beiden Siegel-Walzen (4, 5) ortsfest am Gestell (1) der Maschine angeordnet ist und die Antriebskraft auf die Siegelwalzen (4,5) entlang der Schwenkhebel (25.1, 25.2, 26.1, 26.2) übertragen wird, insbesondere mittels eines Riemen-Triebes.

19. Schlauchbeutel-Maschine nach einem der Ansprüche 8 - 18,
**dadurch gekennzeichnet, dass**
entweder
- die Siegelelemente (4, 5) die Heiß-Siegelelemente (4, 5) einer Heiz-Siegeleinheit sind und
- insbesondere die Temperatur der Kontaktflächen (4a, 5a) der Heiß-Siegelelemente (4, 5) steuerbar ist,
oder
- die Siegelelemente (4, 5) die Sonotrode (6) und der Amboss (7) einer Ultraschall-Siegeleinheit sind und
- insbesondere die Frequenz und/oder Amplitude und/oder Schwingungsrichtung der Sonotrode (6) steuerbar ist.

20. Schlauchbeutel-Maschine nach einem der Ansprüche 8 - 19,
**dadurch gekennzeichnet, dass**
- eine Transportvorrichtung (2) zum Zuführen der Produkte (P) und/oder
- eine Befestigungsvorrichtung für eine Vorratsrolle mit der Folienbahn (3) zum Herstellen der Schlauchbeutel (3")
vorhanden ist.

## Claims

1. Method for producing the longitudinal sealed seam (9) and the transverse sealed seam (19) in the production of tubular bags (3") on the film tube (3') running in the direction of passage (10) at a variable tube speed,
wherein the longitudinal sealed seam (9) is produced by ultrasonic sealing and
- thereby, by changing ultrasonic sealing parameters, the energy input into the film (3) to be sealed is being adapted in real time by means of the sonotrode,
wherein the transverse sealed seam (19) is produced by
- pressing against each other two transverse sealing elements (4, 5) lying opposite each other with respect to the film tube (3') in a first transverse direction (11) to the direction of passage (10) during a sealing time with a sealing pressure and heating and transverse sealing of the film tube (3') located between them,
- wherein the contact surfaces (4a, 5a) of the two transverse sealing elements (4, 5), which are directed towards each other, are moved substantially synchronously along a limited sealing path (18) with the film tube (3') abutted thereto,
wherein
depending on the changing tube speed, the operating parameters of the sealing elements (4, 5), namely
- the sealing time
or
- the length of the sealing distance (18)
are controlled automatically in such a way that the energy input caused during transverse sealing into the transverse sealed seam of the film (3), which is to be specifically produced, is kept within a predetermined target range.

2. Method according to claim 1,
**characterized in that**
- the sealing elements (4, 5) are the heat-sealing elements (4, 5) of a heat-sealing unit and
- the temperature of the contact surfaces (4a, 5a) of the heat-sealing elements (4, 5) is controlled as a function of the average tube speed.

3. Method according to claim 1 or 2,
**characterized in that**
- the contact surfaces (4a, 5a) of the transverse sealing elements (4, 5), which are directed towards each other, are each moved about a transverse axis (4', 5') lying transversely to the direction of passage (10) and transversely to the first transverse direction (11) in a second transverse direction (12), and
- the transverse axes (4', 5') of the transverse sealing elements (4, 5) are displaced in the longitudinal direction (10) relative to the film tube (3') at least during pressing against each other, depending on the tube speed.

4. Method according to claim 3,
**characterized in that**
the transverse axes are axes of rotation (4', 5') around which the respective transverse sealing element (4, 5) rotates, which is equipped with at least one contact surface (4a, 5a) pointing radially outwards.

5. Method according to claim 3,
**characterized in that**
the transverse axes are pivot axes (4', 5') around which the respective transverse sealing elements (4, 5) are pivoted back and forth and whose contact surfaces (4a, 5a) pointing radially outwards from the transverse axes (4', 5') are thereby moved back and forth in the direction of passage (10), and in particular the pivot axes (4', 5') additionally oscillating in the first transverse direction (11) in such a way that the two contact surfaces (4a, 5a) alternately contact the film tube (3') at the same time and simultaneously lift off it again.

6. Method according to one of claims 1 or 3 - 5,
**characterized in that**
- the sonotrode and anvil of an ultrasonic sealing unit are used as sealing elements (4, 5) and
- a longitudinal sealed seam (9) present at the film tube (3') is deposited in a defined deposit position on the upper side of the film tube (3') before transverse sealing,
- in particular then also the frequency and/or amplitude and/or direction of oscillation of the sonotrode is controlled automatically depending on the changing tube speed.

7. Method according to any of the preceding claims,
**characterized in that**
- during transverse sealing, in particular using the same tool, perforation or cutting of the film tube (3') in the second transverse direction (12) takes place in the longitudinal region of the transverse sealed seam (19), and
- downstream of the cutting, the produced individual tubular bags (3") are transported away, in particular at a transport speed which is independent of the speed of the film tube (3') when it is cut.

8. Tubular bag machine with
- a base frame (1),
- an ultrasonic longitudinal sealing unit (16) for sealing the lateral edges (3a, b) of the film web (3) against each other by means of a longitudinal sealed seam (9) running in the direction of passage (10) of the film web (3) to form a film tube (3'),
- a transverse sealing unit (17) with contact surfaces (4a, 5a) of sealing elements (4, 5) movable both in a first transverse direction (11) to the direction of passage (10) and in and against the direction of passage (10) of the film tube (3') for producing a transverse sealed seam (19) extending, in particular primarily, in a second transverse direction (12),
- a control (50) for controlling the entire tubular bag machine,
wherein
the ultrasonic longitudinal sealing unit (16) and the control unit (50) are formed so that, by changing ultrasonic sealing parameters, the energy input into the film (3) to be sealed can be adapted to the changing tube speed in real time by means of the sonotrode,
the transverse sealing unit (17) and the control (50) are formed so that their operating parameters, namely
- the sealing time,
or
- the length of the sealing distance (18)
can be automatically controlled by the control as a function of the changing tube speed in such a way that the energy input caused during transverse sealing into the transverse sealed seam of the film (3), which is to be specifically produced, can be kept within a predetermined target range.

9. Tubular bag machine according to claim 8,
**characterized in that**
- the contact surfaces (4a, 5a) of the transverse sealing elements (4, 5), which are directed towards each other, are arranged so as to be movable about a respective transverse axis (4', 5') lying transversely to the direction of passage (10) and transversely to the first transverse direction (11) in a second transverse direction (12), and
- the transverse axes (4', 5') of the transverse sealing elements (4, 5) are displaced in the longitudinal direction (10) relative to the film tube (3') at least during pressing against each other, depending on the tube speed.

10. Tubular bag machine according to claim 9,
**characterized in that**
- the transverse axes (4', 5') are pivot axes (4', 5') about which the respective sealing elements (4, 5) pivot back and forth and whose contact surfaces (4a, 5a) pointing in particular radially outwards from the transverse axes (4', 5') thereby move back and forth in the direction of passage (10), and
- in particular the pivot axes (4', 5') additionally move oscillating in the first transverse direction (11) in such a way that the two contact surfaces (4a, 5a) alternately contact the film tube (3') at the same time and simultaneously lift off it again, in particular
- the sealing elements (4, 5) which pivot back and forth about the pivot axes (4', 5') are operatively, in particular respectively, connected to a crank (15) which rotates about a second transverse direction (12).

11. Tubular bag machine according to claim 9 or 10,
**characterized in that**
- the transverse axes (4', 5') are axes of rotation (4', 5') about which the respective sealing element (4, 5), in particular the sealing roller (4, 5), which is equipped with at least one contact surface (4a, 5a) facing radially outwards, is rotatable,
- in particular the sealing elements (4, 5), in particular together, are arranged in a base body (8) which can be moved in and against the direction of passage (10), in particular linearly.

12. Tubular bag machine according to claim 11,
**characterized in that**
the base body (8) is movable in and against the direction of passage (10) by being shiftable as a carriage along guides extending in the direction of passage (10).

13. Tubular bag machine according to claim 11 or 12,
**characterized in that**
- two of the four parallelogram axes (25'), extending in the second transverse direction (12), of a first quadrilateral joint in the form of a first pivot lever parallelogram (25) are arranged, in particular directly, on the base body (8),
- wherein the base body (8) connects the two analog ends of the two pivot levers (25.1, 25.2) of the first pivot lever parallelogram (25) as a yoke (25.4).

14. Tubular bag machine according to claim 13,
**characterized in that**
- the ends of the two pivot levers (25.1, 25.2) of the first pivot lever parallelogram (25), which are averted from the base body (8) or yoke (8), are pivotably attached to a second pivot lever parallelogram (26),
- wherein the pivot levers (26.1, 26.2) of the second pivot lever parallelogram (26) are also pivotable about parallelogram axes (26') extending in the second transverse direction (12) and
- the ends of the two pivot levers (26.1, 26.2) of the second pivot lever parallelogram (26), which are averted from the first pivot lever parallelogram (25), are attached to the base frame (1) of the machine so as to be pivotable, in particular directly.

15. Tubular bag machine according to claim 13 or 14,
**characterized in that**
the two pivot levers (26.1, 26.2) of the second pivot lever parallelogram (26) on the yoke (26.4) connecting the two pivot levers (26.1, 26.2) of the second pivot lever parallelogram (26) at the end averted from the base frame (1) is an arm (27a) of a triangular control arm (27), on whose other arm (27b) the two pivot levers (25.1, 25.2) of the first pivot lever parallelogram (25) are arranged.

16. Tubular bag machine according to one of claims 13 - 15,
**characterized in that**
- the pivot levers (25.1, 25.2 or 26.1, 26.2) of one pivot lever parallelogram (25 or 26) extend primarily in the first transverse direction (11) and serve to displace the base body (8) primarily in the longitudinal direction (10)
and/or
- the pivot levers (26.1, 26.2 or 25.1, 25.2) of the other pivot lever parallelogram (26 or 25) extend primarily in the longitudinal direction (10) and serve to displace the base body (8) primarily in the first transverse direction (11).

17. Tubular bag machine according to one of claims 13 - 16,
**characterized in that**
- a parallelogram drive (28, 29) engages at each pivot lever parallelogram (25, 26), which - in particular via a pivotable drive lever (28a, 29a) - can be driven in a controlled manner by means of a worm gear/pinion drive from its own motor (M25, M26),
- wherein the control is capable of controlling the two parallelogram drives in such a way that, despite the movement of the base body (8) in the longitudinal direction (10), the base body (8) remains at the same or an optional height position relative to the base frame and/or at the same angular position relative to the horizontal.

18. Tubular bag machine according to one of claims 13 to 17,
**characterized in that**
the at least one motor (M45) for driving the two sealing rollers (4, 5) is arranged stationarily on the frame (1) of the machine and the driving force is transmitted to the sealing rollers (4, 5) along the pivoting levers (25.1, 25.2, 26.1, 26.2), in particular by means of a belt drive.

19. Tubular bag machine according to one of claims 8 - 18,
**characterized in that**
either
- the sealing elements (4, 5) are the heat-sealing elements (4, 5) of a heat-sealing unit and
- in particular the temperature of the contact surfaces (4a, 5a) of the heat-sealing elements (4, 5) can be controlled,
or
- the sealing elements (4, 5) are the sonotrode (6) and the anvil (7) of an ultrasonic sealing unit and
- in particular the frequency and/or amplitude and/or direction of oscillation of the sonotrode (6) can be controlled.

20. Tubular bag machine according to one of claims 8 - 19,
**characterized in that**
- a transport device (2) for feeding the products (P)
and/or
- a fastening device for a supply roll with the film web (3) for producing the tubular bags (3")
exists.

## Revendications

1. Procédé de réalisation du joint scellé longitudinal (9) et du joint scellé transversal (19) lors de la fabrication de sachets tubulaires (3") pour le tube de film (3') se déplaçant dans la direction du passage (10) avec une vitesse de tube variable,
dans lequel le joint scellé longitudinal (9) est réalisé par scellage par ultrasons, et
- dans lequel l'apport d'énergie dans le film (3) à sceller via la sonotrode est adapté en temps réel par la modification de paramètres de scellage par ultrasons;
dans lequel le joint scellé transversal (19) est réalisé en
- pressant l'un contre l'autre deux éléments de scellage transversaux (4, 5) opposés par rapport au tube de film (3') dans une première direction transversale (11) à la direction de passage (10) pendant un temps de scellage avec une pression de scellage et en chauffant et scellant transversalement le tube de film (3') situé entre eux,
- dans lequel les surfaces de contact (4a, 5a) des deux éléments de scellage transversaux (4, 5) orientées l'une vers l'autre, sont également déplacées essentiellement de manière synchrone sur une distance de scellage limitée (18) avec le tube de film (3') qui y est adjacent,
dans lequel
en fonction de la vitesse variable du tube, les paramètres de fonctionnement des éléments de scellage transversaux (4, 5), à savoir
- le temps de scellage
ou
- la longueur de la distance de scellage (18)
sont commandés automatiquement de telle manière que l'apport d'énergie dans le joint scellé transversal du film (3) à réaliser concrètement lors du scellage transversal soit maintenu dans une plage cible prédéterminée.

2. Procédé selon la revendication 1,
***caractérisé en ce que***
- les éléments de scellage (4, 5) sont les éléments de thermoscellage (4, 5) d'une unité de thermoscellage et
- la température des surfaces de contact (4a, 5a) des éléments de thermoscellage (4, 5) est régulée en fonction de la vitesse moyenne du tube.

3. Procédé selon la revendication 1 ou 2,
***caractérisé en ce que***
- les surfaces de contact (4a, 5a) des éléments de scellage transversaux (4, 5) orientées l'une vers l'autre, sont déplacées autour d'un axe transversal (4', 5') respectif situé transversalement à la direction de passage (10) et transversalement à la première direction transversale (11) dans une deuxième direction transversale (12), et
- les axes transversaux (4', 5') des éléments de scellage transversaux (4, 5) sont déplacés dans la direction longitudinale (10) par rapport au tube de film (3') au moins pendant la compression l'un contre l'autre, en fonction de la vitesse du tube.

4. Procédé selon la revendication 3,
***caractérisé en ce que***
les axes transversaux sont des axes de rotation (4', 5') autour desquels tourne l'élément de scellage respectif (4, 5), qui est équipé d'au moins une surface de contact (4a, 5a) orientée radialement vers l'extérieur.

5. Procédé selon la revendication 3,
***caractérisé en ce que***
les axes transversaux sont des axes de pivotement (4', 5') autour desquels les éléments de scellage respectifs (4, 5) pivotent en va-et-vient et dont les surfaces de contact (4a, 5a) orientées radialement vers l'extérieur à partir des axes transversaux (4', 5') sont ainsi déplacées en va-et-vient dans la direction de passage (10), et en particulier les axes de pivotement (4', 5') sont déplacés en outre de manière oscillante dans la première direction transversale (11) de telle sorte que les deux surfaces de contact (4a, 5a) entrent en contact simultanément avec le tube de film (3') et s'éloignent de celui-ci simultanément en alternance.

6. Procédé selon l'une des revendications 1 ou 3 à 5,
***caractérisé en ce que***
- la sonotrode et l'enclume d'une unité de scellage par ultrasons sont utilisées comme éléments de scellage (4, 5) et
- un joint scellé longitudinal (9) présent au tube de film (3') est déposé dans une position de dépôt définie sur le côté supérieur du tube de film (3') avant le scellement transversal,
- puis, en particulier, la fréquence et/ou l'amplitude et/ou le sens d'oscillation de la sonotrode sont réglés automatiquement en fonction de la vitesse variable du tube.

7. Procédé selon l'une des revendications précédentes
***caractérisé en ce que***
- lors du scellement transversal, en particulier en utilisant le même outil, une perforation ou une découpe du tube de film (3') dans la deuxième direction transversale (12) a lieu dans la zone longitudinale du joint scellé transversal (19), et
- en aval de la découpe, les différents sachets tubulaires (3") produits sont évacués, en particulier avec une vitesse de transport indépendante de la vitesse du tube de film (3') lors de la découpe.

8. Machine à sachets tubulaires avec
- un châssis de base (1),
- une unité de scellage longitudinal (16) par ultrasons pour sceller les bords latéraux (3a, b) de la bande de film (3) l'un contre l'autre au moyen d'un joint scellé longitudinal (9) s'étendant dans la direction de passage (10) de la bande de film (3) pour former un tube de film (3'),
- une unité de scellage transversal (17) avec des surfaces de contact (4a, 5a) d'éléments de scellage (4, 5) mobiles aussi bien dans une première direction transversale (11) par rapport à la direction de passage (10) que dans et contre la direction de passage (10) du tube de film (3') pour la réalisation d'un joint scellé transversal (19) s'étendant en particulier principalement dans une deuxième direction transversale (12),
- un système de commande (50) pour commander l'ensemble de la machine à sachets tubulaires,
dans lequel
l'unité de scellage longitudinal (16) par ultrasons et le système de commande (50) sont conçus de telle sorte que l'apport d'énergie dans le film (3) à sceller via la sonotrode peut être adapté en temps réel à la vitesse variable du tube par la modification de paramètres de scellage par ultrasons;
l'unité de scellage transversale (17) et le système de commande (50) sont conçus de telle sorte que leurs paramètres de fonctionnement, à savoir
- le temps de scellage
ou
- la longueur de la distance de scellage (18)
peuvent être commandés automatiquement par le système de commande en fonction de la vitesse variable du tube de telle manière que l'apport d'énergie dans le joint scellé transversal du film (3) à réaliser concrètement lors du scellage transversal peut être maintenu dans une plage cible prédéterminée.

9. Machine à sachets tubulaires selon la revendication 8,
***caractérisé en ce que***
- les surfaces de contact (4a, 5a) des éléments de scellage transversaux (4, 5) orientées l'une vers l'autre, sont disposées de façon mobile autour d'un axe transversal (4', 5') respectif situé transversalement à la direction de passage (10) et transversalement à la première direction transversale (11) dans une deuxième direction transversale (12), et
- les axes transversaux (4', 5') des éléments de scellage transversaux (4, 5) sont déplacés dans la direction longitudinale (10) par rapport au tube de film (3') au moins pendant la compression l'un contre l'autre, en fonction de la vitesse du tube.

10. Machine à sachets tubulaires selon la revendication 9,
***caractérisé en ce que***
- les axes transversaux (4', 5') sont des axes de pivotement (4', 5') autour desquels les éléments de scellage respectifs (4, 5) pivotent en va-et-vient et dont les surfaces de contact (4a, 5a) orientées en particulier radialement vers l'extérieur à partir des axes transversaux (4', 5') sont ainsi déplacés en va-et-vient dans la direction de passage (10), et
- en particulier les axes de pivotement (4', 5') se déplacent en outre de manière oscillante dans la première direction transversale (11) de telle sorte que les deux surfaces de contact (4a, 5a) entrent en contact simultanément avec le tube de film (3') et s'éloignent de celui-ci simultanément en alternance, en particulier
- les éléments de scellage (4, 5) qui pivotent en va-et-vient autour des axes de pivotement (4', 5') sont en liaison active, en particulier chacun avec une manivelle (15) qui tourne autour d'une deuxième direction transversale (12).

11. Machine à sachets tubulaires selon la revendication 9 ou 10,
***caractérisé en ce que***
- les axes transversaux (4', 5') sont des axes de rotation (4', 5') autour desquels l'élément de scellage (4, 5) respectif, en particulier le rouleau de scellage (4, 5), qui est équipé d'au moins une surface de contact (4a, 5a) orientée radialement vers l'extérieur, peut tourner,
- en particulier les éléments de scellage (4, 5), en particulier ensemble, sont disposés dans un corps de base (8) qui peut être déplacé dans et contre la direction de passage (10), en particulier de manière linéaire.

12. Machine à sachets tubulaires selon la revendication 11,
***caractérisé en ce que***
le corps de base (8) peut être déplacé dans et contre la direction de passage (10) en étant coulissant comme un chariot le long de guides s'étendant dans la direction de passage (10).

13. Machine à sachets tubulaires selon la revendication 11 ou 12,
***caractérisé en ce que***
- sur le corps de base (8) deux des quatre axes de parallélogramme (25') s'étendant dans la deuxième direction transversale (12), d'une première articulation quadrilatérale sous la forme d'un premier parallélogramme de leviers pivotants (25) sont disposés en particulier directement,
- dans lequel le corps de base (8) relie les deux extrémités analogues des deux leviers pivotants (25.1, 25.2) du premier parallélogramme de leviers pivotants (25) en tant que joug (25.4).

14. Machine à sachets tubulaires selon la revendication 13,
***caractérisé en ce que***
- les extrémités des deux leviers pivotants (25.1, 25.2) du premier parallélogramme de leviers pivotants (25), qui sont éloignées du corps de base (8) ou du joug (8), sont fixées de manière pivotante à un deuxième parallélogramme de leviers pivotants (26),
- dans lequel les leviers pivotants (26.1, 26.2) du deuxième parallélogramme de leviers pivotants (26) peuvent également pivoter autour d'axes de parallélogramme (26') s'étendant dans la deuxième direction transversale (12) et
- les extrémités, éloignées du premier parallélogramme de leviers pivotants (25), des deux leviers pivotants (26.1, 26.2) du deuxième parallélogramme de leviers pivotants (25) sont fixées de manière pivotante, en particulier directement, sur le châssis de base (1) de la machine.

15. Machine à sachets tubulaires selon la revendication 13 ou 14,
***caractérisé en ce que***
le joug (26.4) reliant les deux leviers pivotants (26.1, 26.2) du deuxième parallélogramme de leviers pivotants (26) à l'extrémité opposée au châssis de base (1) est une branche (27a) d'un guidon triangulaire (27), sur l'autre branche (27b) de laquelle sont disposés les deux leviers pivotants (25.1, 25.2) du premier parallélogramme de leviers pivotants (25).

16. Machine à sachets tubulaires selon une des revendications 13 à 15,
***caractérisé en ce que***
- les leviers pivotants (25.1, 25.2 ou 26.1, 26.2) d'un parallélogramme de leviers pivotants (25 ou 26) s'étendent principalement dans la première direction transversale (11) et servent à déplacer le corps de base (8) principalement dans la direction longitudinale (10)
et/ou
- les leviers pivotants (26.1, 26.2 ou 25.1, 25.2) de l'autre parallélogramme de leviers pivotants (26 ou 25) s'étendent principalement dans la direction longitudinale (10) et servent à déplacer le corps de base (8) principalement dans la première direction transversale (11).

17. Machine à sachets tubulaires selon une des revendications 13 à 16,
***caractérisé en ce que***
- un entraînement à parallélogramme (28, 29) engage chaque parallélogramme de leviers pivotants (25, 26), lequel entraînement - en particulier par l'intermédiaire d'un levier d'entraînement pivotant (28a, 29a) - peut être entraîné de manière contrôlée au moyen d'un entraînement à vis sans fin/pignon à partir de son propre moteur (M25, M26),
- dans lequel le système de commande est capable de commander les deux entraînements à parallélogramme de telle manière que, malgré le mouvement du corps de base (8) dans la direction longitudinale (10), le corps de base (8) reste dans la même position en hauteur ou dans une position en hauteur au choix par rapport au châssis de base et/ou dans la même position angulaire par rapport à l'horizontale.

18. Machine à sachets tubulaires selon l'une des revendications 13 à 17,
***caractérisé en ce que***
ledit au moins un moteur (M45) pour l'entraînement des deux rouleaux de scellage (4, 5) est disposé en position stationnaire sur le châssis (1) de la machine et la force d'entraînement est transmise aux rouleaux de scellage (4, 5) le long des leviers pivotants (25.1, 25.2, 26.1, 26.2), en particulier au moyen d'une transmission par courroie.

19. Machine à sachets tubulaires selon une des revendications 8 à 18,
***caractérisé en ce que***
soit
- les éléments de scellage (4, 5) sont les éléments de thermoscellage (4, 5) d'une unité de thermoscellage, et
- en particulier la température des surfaces de contact (4a, 5a) des éléments de thermoscellage (4, 5) peut être contrôlée,
ou
- les éléments de scellage (4, 5) sont la sonotrode (6) et l'enclume (7) d'une unité de scellage à ultrasons et
- en particulier la fréquence et/ou l'amplitude et/ou la direction d'oscillation de la sonotrode (6) peuvent être contrôlées.

20. Machine à sachets tubulaires selon une des revendications 8 à 19,
***caractérisé en ce que***
- un dispositif de transport (2) pour alimenter les produits (P) et/ou
- un dispositif de fixation pour un rouleau d'alimentation de bande de film (3) pour la fabrication des sachets tubulaires (3")
est prévu.
